# EUROPÄISCHE PATENTANMELDUNG

(11) **EP 3 595 146 A1**
(43) Veröffentlichungstag der Anmeldung: **15.01.2020**
(21) Anmeldenummer: 18183041.5
(22) Anmeldetag: 12.07.2018
(51) Int. Cl.: H02K 15/00, H02K 17/16

(54) **ROTOR MIT KURZSCHLUSSKÄFIG, HERSTELLUNGSVERFAHREN**

(71) Anmelder: Siemens Aktiengesellschaft, 80333 München (DE)
(72) Erfinder: Müller, Jörg, 97720 Nüdlingen (DE); Schneider, Alexandra, 97618 Heustreu (DE); Seufert, Reiner, 97616 Salz (DE); Vollmer, Rolf, 36129 Gersfeld (DE)

(57) **Zusammenfassung**

Die Erfindung betrifft ein Verfahren zur Herstellung eines Rotors (1) einer dynamoelektrischen rotatorischen Maschine, wobei der Rotor (1) einen konzentrisch zur Rotorachse (R) angeordneten Rotorkern (3) aufweist, wobei der Rotorkern (3) Stäbe (4) mit Stabenden (41,42) aufweist, wobei die Stabenden (41,42) über wenigstens ein axiales Ende (5,6) des Rotorkerns (3) hinausragend ausgeführt sind, wobei die Stabenden (41,42) mittels eines Verbindungsmittels (7,8,9,11,12) verbunden werden, wobei ein Zwischenraum (25,26) zwischen den Stabenden (41,42) mittels eines additiven Verfahrens gefüllt wird. Die Erfindung betrifft einen Kurzschlussring für einen Rotor (1) einer dynamoelektrischen rotatorischen Maschine, einen Rotor (1) und eine dynamoelektrische rotatorische Maschine.

## Beschreibung

Die Erfindung betrifft ein Verfahren zur Herstellung eines Rotors einer dynamoelektrischen rotatorischen Maschine. Ferner betrifft die Erfindung einen Kurzschlussring, einen Rotor sowie eine dynamoelektrische rotatorische Maschine.

Eine Herstellung eines Kurzschlusskäfigs, der Stäbe bzw. Käfigstäbe im Rotorstapel sowie Kurzschlussringe an den Enden des Rotorstapels umfasst, für einen Rotor einer dynamoelektrischen rotatorischen Maschine, insbesondere Asynchronmaschine, gelingt bisher unter anderem mit einem Kupfer-Druckgießverfahren. Hierbei werden die Kurzschlussringe gegossen.

Bei einem weiteren bekannten Verfahren werden Kupferscheiben als Kurzschlussringe an vorhandene Käfigstäbe angelötet oder angeschweißt.

Infolge der hohen thermischen Belastung beim Kupfer-Druckgießen haben die Kupfer-Druckgieß-Werkzeuge eine eingeschränkte Lebensdauer. Eine elektrische Leitfähigkeit des druckgegossenen Kupfers ist zudem aufgrund von Materialverschmutzung und Lunkern verringert.

Aufgrund von Belastungen durch Fliehkräfte und Schwingungen besteht beim Anlöten bzw. Anschweißen des Kurzschlussrings an die Käfigstäbe die Gefahr der Rissbildung an den entstandenen Löt- oder Schweißstellen zwischen Käfigstab und Kurzschlussring.

Der Erfindung liegt daher die Aufgabe zugrunde, ein Verfahren zur Herstellung eines - vorzugsweise als Käfigläufer ausgeführten - Rotors einer dynamoelektrischen rotatorischen Maschine zu verbessern.

Die Lösung der Aufgabe gelingt durch Anspruch 1, d. h. ein Verfahren zur Herstellung eines Rotors einer dynamoelektrischen rotatorischen Maschine, wobei der Rotor einen konzentrisch zur Rotorachse angeordneten Rotorkern aufweist, wobei der Rotorkern Stäbe mit Stabenden aufweist, wobei die Stabenden über wenigstens ein axiales Ende des Rotorkerns hinausragend ausgeführt sind, wobei die Stabenden mittels eines Verbindungsmittels verbunden werden, wobei ein Zwischenraum zwischen den Stabenden mittels eines additiven Verfahrens gefüllt wird.

Ferner gelingt die Lösung der Aufgabe durch Anspruch 12, d. h. einen Kurzschlussring für einen Rotor einer dynamoelektrischen rotatorischen Maschine, hergestellt mit diesem Verfahren.

Ferner gelingt die Lösung der Aufgabe durch Anspruch 13, d. h. einen Rotor einer dynamoelektrischen rotatorischen Maschine, aufweisend einen derartigen Kurzschlussring.

Überdies gelingt die Lösung der Aufgabe durch Anspruch 14, d. h. eine dynamoelektrische rotatorische Maschine, aufweisend einen derartigen Rotor.

Vorzugsweise werden wenigstens zwei Stabenden mittels des Verbindungsmittels miteinander verbunden.

Die Erfindung bietet den Vorteil, dass der Kurzschlussring und somit der Kurzschlusskäfig günstig und flexibel hergestellt werden können. Die Verbindungsmittel müssen nicht für jede Baugröße der dynamoelektrischen rotatorischen Maschine gesondert gefertigt werden.

In einer vorteilhaften Ausführungsform der Erfindung ist das Verbindungsmittel wenigstens ein Draht. Die Stabenden werden mittels wenigstens eines Drahtes verbunden.

Der Draht weist vorzugsweise Stahl auf. Dadurch ist der Draht stabil und robust. Jedoch sind auch Kupfer und/oder Aluminium und/oder deren Legierungen möglich. Auch andere Materialien sind denkbar.

Der Draht kann in verschiedenen Legearten um die Stabenden gelegt werden. Vorzugsweise wird der Draht mäanderförmig um die Stabenden gelegt.

In einer weiteren vorteilhaften Ausführungsform der Erfindung ist das Verbindungsmittel wenigstens ein keilförmiges Verbindungselement. Die Stabenden werden mittels wenigstens eines keilförmigen Verbindungselements verbunden.

Das keilförmige Verbindungselement weist vorzugsweise (aus Stabilitätsgründen) Stahl auf. Jedoch sind auch Kupfer und/oder Aluminium und/oder deren Legierungen möglich. Auch andere Materialien sind denkbar.

Das keilförmige Verbindungselement kann Längenunterschiede zwischen Rotorkern und Stäben kompensieren und somit zu einer Vorspannung beitragen.

In einer weiteren vorteilhaften Ausführungsform der Erfindung ist das Verbindungsmittel wenigstens ein ringförmiges Verbindungselement. Die Stabenden werden mittels wenigstens eines ringförmigen Verbindungselements verbunden.

Das ringförmige Verbindungselement weist vorzugsweise (aus Stabilitätsgründen) Stahl auf. Jedoch sind auch Kupfer und/oder Aluminium und/oder deren Legierungen möglich. Auch andere Materialien sind denkbar.

In einer weiteren vorteilhaften Ausführungsform der Erfindung ist das Verbindungsmittel wenigstens ein sektorförmiges Verbindungselement. Die Stabenden werden mittels wenigstens eines sektorförmigen Verbindungselements verbunden.

Das sektorförmige Verbindungselement weist vorzugsweise (aus Stabilitätsgründen) Stahl auf. Jedoch sind auch Kupfer und/oder Aluminium und/oder deren Legierungen möglich. Auch andere Materialien sind denkbar.

Das sektorförmige Verbindungselement kann Längenunterschiede zwischen Rotorkern und Stäben kompensieren und somit zu einer Vorspannung beitragen.

In einer weiteren vorteilhaften Ausführungsform der Erfindung ist das Verbindungsmittel wenigstens ein halbkreisförmiges Verbindungselement. Die Stabenden werden mittels wenigstens eines halbkreisförmigen Verbindungselements verbunden.

Das halbkreisförmige Verbindungselement weist vorzugsweise (aus Stabilitätsgründen) Stahl auf. Jedoch sind auch Kupfer und/oder Aluminium und/oder deren Legierungen möglich. Auch andere Materialien sind denkbar.

Das halbkreisförmige Verbindungselement kann Längenunterschiede zwischen Rotorkern und Stäben kompensieren und somit zu einer Vorspannung beitragen.

Die genannten Verbindungselemente bieten den Vorteil, dass diese in großer Stückzahl hergestellt werden können (beispielsweise durch Stanzen), wodurch Kosten gegenüber einem Vollmaterial sinken und ein Wettbewerbsvorteil steigt.

In einer weiteren vorteilhaften Ausführungsform der Erfindung werden die Stabenden durch sich selbst verbunden.

Der Vorteil dieser Ausführungsform ist, dass kein zusätzliches Verbindungsmittel benötigt wird. Die Stabenden stellen selbst das Verbindungsmittel dar.

Sie werden hierzu beispielsweise zu Nieten gedrückt. Das Drücken zu Nieten bietet den Vorteil, dass symmetrische Kräfte auftreten.

Die Stabenden können jedoch auch umgebogen werden, sodass sie auf dem Rotorkern aufliegen.

Die Stabenden können auch zu einem Bogen gebogen werden, sodass vorteilhaft ein Stabende mit wenigstens einem anderen Stabende berührend verbunden ist.

Die Stabendenden können auch gespaltet werden (vorzugsweise in zwei gleiche Teilstabenden). Die Teilstabenden können umgebogen werden. Die Teilstabenden werden vorzugsweise derart umgebogen, dass ein Teilstabende mit wenigstens einem anderen Teilstabende berührend verbunden ist

Die beschriebenen Verbindungsmittel stellen vorzugsweise einen Teil des Kurzschlussrings dar und fungieren als Basis beim additiven Verfahren (z. B. als Schweißbasis).

In einer weiteren vorteilhaften Ausführungsform der Erfindung ist das additive Verfahren ein additives Lichtbogen-Schweiß-Verfahren oder ein Metall-Pulver-Auftrags-Verfahren (MPA).

In einer weiteren vorteilhaften Ausführungsform der Erfindung ist das additive Verfahren das 3DMP-Verfahren.

In einer weiteren vorteilhaften Ausführungsform der Erfindung ist das additive Verfahren das Cold-Spray-Verfahren.

Jedoch eignen sich auch andere additive Fertigungsverfahren.

Das additive Verfahren bietet den Vorteil, dass eine stoffschlüssige Verbindung bei gleichzeitigem Materialauftrag erreicht wird. Diese stoffschlüssige Verbindung ist hinsichtlich ihrer elektrischen und mechanischen Eigenschaften optimal.

Das additive Verfahren bietet zudem den Vorteil, dass dieses dazu ausgebildet ist, voll automatisiert abzulaufen. Dies ermöglicht ein prozesssicheres Verfahren. Zudem bietet das additive Verfahren den Vorteil, dass insbesondere Kleinserien und/oder Prototypen flexibel und schnell gefertigt werden können, auch unter Berücksichtigung geänderter Geometrien.

Als additives Lichtbogen-Schweiß-Verfahren wird Schweißen bezeichnet, wenn durch einen Schweißzusatzwerkstoff, z. B. Draht oder Pulver, unter Anwendung von Wärme ein Volumenaufbau stattfindet. Hierbei wird Schicht für Schicht der Schweißzusatzwerkstoff aufgetragen, durch Schmelzen stoffschlüssig mit einem zu verbindenden Bauteil oder der darunterliegenden Schicht verbunden und somit der Volumenaufbau bewerkstelligt.

Verfahren, die auf einem ähnlichen Prinzip beruhen und sich daher ebenso eignen, sind z. B. die Folgenden: Laser-Auftrag-Schweiß-Verfahren oder Plasma-Pulver-Auftrag-Schweiß-Verfahren, DMD-Verfahren (Direct Metal Deposition)und LMD-Verfahren (Laser Metal Deposition).

Beim MPA-Verfahren wird ein Hauptgas, vorzugsweise Wasserdampf, in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe magnetische Energie des Pulverpartikels wird beim Aufprall in Wärme umgewandelt, wodurch der Partikel anhaftet. Da die Pulverpartikel nicht aufgeschmolzen werden, findet nur ein geringer Energieeintrag in das Bauteil statt. Beim MPA-Verfahren können mehrere Düsen gleichzeitig verschiedene Pulverpartikel auftragen. Somit kann auch ein Bauteil geschaffen werden, das wenigstens zwei unterschiedliche Materialien aufweist.

Das 3DMP-Verfahren basiert auf dem Lichtbogen-Schweiß-Verfahren und verwendet als Ausgangsmaterial Draht. Schweißraupe für Schweißraupe wird hiermit ein Werkstück gedruckt. Das 3DMP-Verfahren bietet den Vorteil, dass viele Materialien bereits als Draht erhältlich sind, nicht jedoch als Pulver.

Zudem ist Draht als Werkstoff günstiger als Werkstoff in Pulverform. Das 3DMP-Verfahren bietet ferner eine hohe Aufbaurate.

Beim Cold-Spray-Verfahren werden Pulverpartikel, insbesondere mit einem Durchmesser von 1 bis 50 µm, in einem Überschallgasstrahl auf Geschwindigkeiten von vorzugsweise bis zu 500 - 1000 m/s beschleunigt. Beim Aufprall auf eine Oberfläche werden die Partikel plastisch verformt und haften an der Oberfläche.

In einer weiteren vorteilhaften Ausführungsform der Erfindung umfasst das Verbindungsmittel Kupfer und/oder Aluminium und/oder deren Legierungen.

In einer weiteren vorteilhaften Ausführungsform der Erfindung umfasst das Material für das additive Verfahren Kupfer und/oder Aluminium und/oder deren Legierungen.

Aluminium und Kupfer stellen in Bezug auf Preis und Leitfähigkeit die bestmögliche Option zur Bildung einer elektrisch leitfähigen Verbindung dar.

Die elektrisch leitfähige Verbindung zwischen Kurzschlussring und Käfigstäben wird vorteilhaft mit einem Material realisiert, welches bereits in den Käfigstäben enthalten ist bzw. aus welchem die Käfigstäbe bestehen, vorzugsweise Kupfer.

Dies hat den Vorteil, dass nur geringe Adhäsionskräfte vorliegen und dadurch die Verbindung beständig gegenüber mechanischen Belastungen ausgebildet werden kann.

Ein Kurzschlusskäfig wird vorteilhaft mittels des beschriebenen Verfahrens gefertigt. Er weist daher gute Eigenschaften bezüglich Beständigkeit gegenüber mechanischen Belastungen sowie Leitfähigkeit auf.

Im Folgenden wird die Erfindung anhand der in den Figuren beschriebenen Ausführungsbeispiele näher beschrieben und erläutert. Es zeigen:
- FIG 1: einen Rotor einer dynamoelektrischen rotatorischen Maschine,
- FIG 2: eine Ausgestaltung des Verbindungsmittels mittels Draht,
- FIG 3: eine weitere Ausgestaltung des Verbindungsmittels mittels Draht,
- FIG 4: weitere Ausgestaltungen des Verbindungsmittels,
- FIG 5: eine Ausgestaltung des Verbindungsmittels mittels eines halbkreisförmigen Verbindungselements,
- FIG 6: eine Ausgestaltung des Verbindungsmittels mittels eines ringförmigen Verbindungselements,
- FIG 7: eine Ausgestaltung des Verbindungsmittels, wobei das Stabende selbst das Verbindungsmittel ist und
- FIG 8: das Verfahren zur Herstellung.

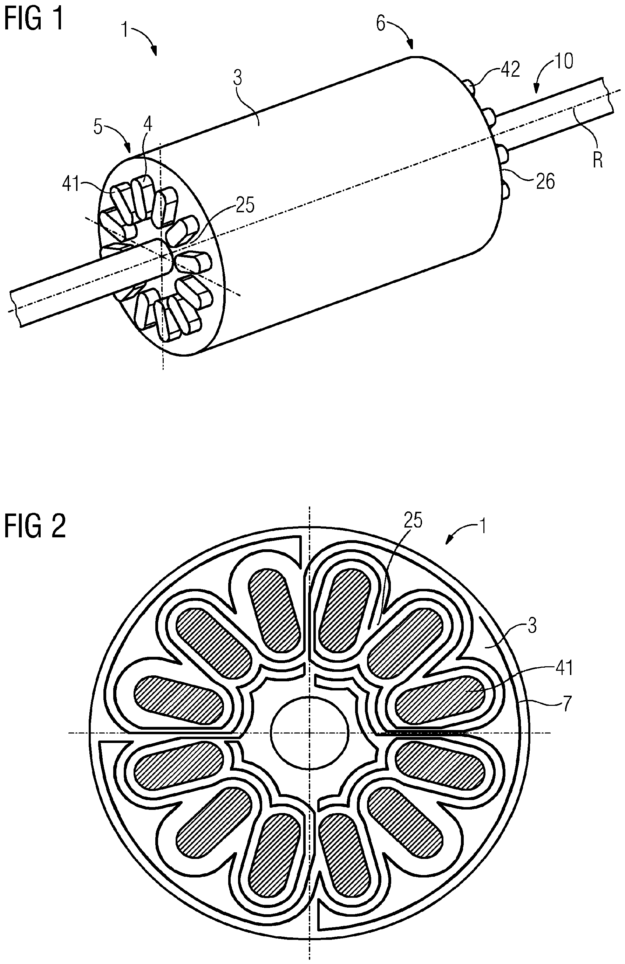

FIG 1 zeigt einen Rotor 1 einer dynamoelektrischen rotatorischen Maschine.

Der Rotor 1 weist einen konzentrisch zur Rotorachse R angeordneten Rotorkern 3 auf. Der Rotorkern 3 weist Stäbe 4 mit Stabenden 41,42 auf. Die Stabenden 41,42 sind in der Figur über axiale Enden 5,6 des Rotorkerns 3 hinausragend ausgeführt. Der Rotor 1 ist an eine Welle 10 angebunden.

Die Stäbe 4 sind vorzugsweise Kupferformstäbe. Die Stäbe 4 sind vorzugsweise vorgefertigt. Die Stäbe 4 sind vorzugsweise in im Rotorkern 3 befindliche Nuten eingesteckt bzw. eingepresst.

Der Rotorkern 3 weist in der Figur an einem vorderen 5 und an einem hinteren axialen Ende 6 jeweils Zwischenräume 25 bzw. 26 zwischen den Stabenden 41,42 auf.

Die Stabenden 41,42 sind erfindungsgemäß mittels eines Verbindungsmittels zu verbinden und die Zwischenräume 25,26 mittels eines additiven Verfahrens zu füllen.

Vorzugsweise wird mittels des additiven Verfahrens so viel Material auf die axialen Enden 5,6 des Rotorkerns 3 aufgebracht, dass der Rotorkern 3 einen konzentrisch zur Rotorachse R angeordneten Ring, also einen Kurzschlussring, aufweist.

Der Kurzschlussring umfasst demzufolge vorzugsweise die Stabenden 41,42, das Verbindungsmittel 7,8,9,11,12 sowie das beim additiven Verfahren verwendete Material (insbesondere Kupfer und/oder Aluminium und/oder deren Legierungen).

FIG 2 zeigt eine Ausgestaltung des Verbindungsmittels mittels Draht 7. Das Verbindungsmittel ist Draht 7.

Der Draht 7 ist in der Figur in einem Strang um die Stabenden 41 gelegt.

Der Draht berührt vorzugsweise den Rotorkern 3.

Der Draht 7 kann jedoch auch unterbrochen werden und muss nicht in einem Strang um die Stabenden 41 gelegt werden.

Vorzugsweise wird jedes Stabende 41 wenigstens einmal vom Draht umschlungen.

Es ist jedoch auch möglich, dass um ein oder mehrere Stabenden 41 kein Draht geschlungen wird.

Es ist auch möglich, dass die Stabenden 41 nur teilweise von Draht 7 umgeben, beispielsweise die Stabenden 41 berührend, sind.

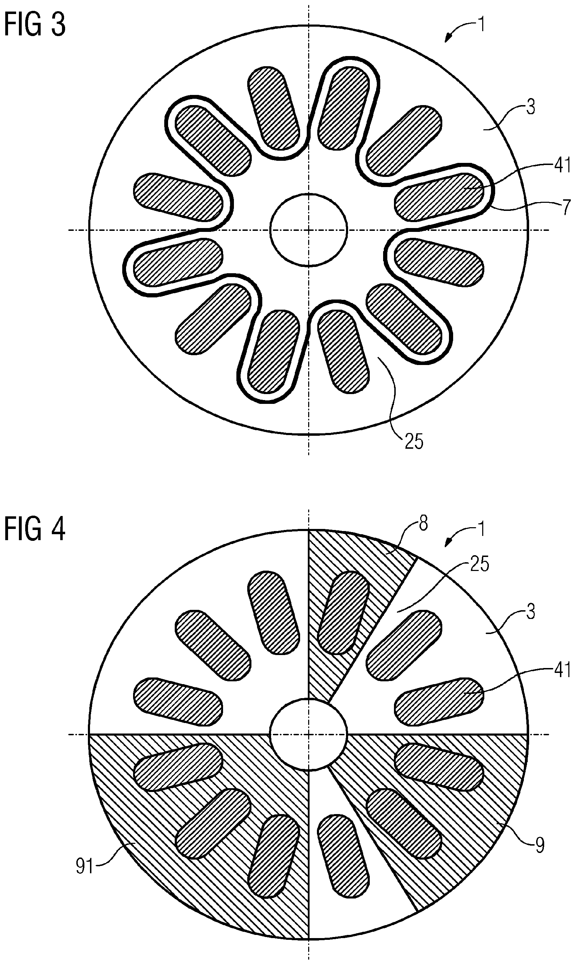

FIG 3 zeigt eine weitere Ausgestaltung des Verbindungsmittels mittels Draht 7. Das Verbindungsmittel ist Draht 7.

Die Figur zeigt eine Ausgestaltung mittels Draht 7, wobei der Draht 7 mäanderförmig um die Stabenden 41 gelegt ist.

Der Draht 7 in FIG 2 und FIG 3 kann ein- oder mehrlagig um die Stabenden gelegt werden. Der Draht 7 kann auf einem immer gleichen Pfad um die Stabenden gelegt werden oder auf unterschiedlichen Pfaden um die Stabenden gelegt werden.

FIG 4 zeigt weitere Ausgestaltungen des Verbindungsmittels.

Die Figur zeigt ein keilförmiges Verbindungselement 8. Das keilförmige Verbindungselement 8 umgibt in der Figur ein Stabende 41. Es kann jedoch - je nach Anzahl an Käfigstäben - auch zwei oder mehr Stabenden 41 umgeben.

Die Figur zeigt zwei Ausgestaltungen eines sektorförmigen Verbindungselements 9,91. Das sektorförmige Verbindungselement 9 umgibt in der Figur zwei Stabenden 41. Es kann jedoch auch drei oder mehr Stabenden 41 umgeben. Das sektorförmige Verbindungselement 91 umgibt in der Figur drei Stabenden 41. Es kann jedoch auch vier oder mehr Stabenden 41 umgeben.

Vorzugsweise ist eine Gesamtanzahl an Stäben maßgebend für eine Anzahl an vom keilförmigen bzw. sektorförmigen Verbindungselement umgebenen Stabenden. In der Figur sind zwölf Stabenden gezeigt, das sektorförmige Verbindungselement 91 umgibt in der Figur drei Stabenden.

Wenn ein Rotor beispielsweise 24 Stabenden aufweist, kann das sektorförmige Verbindungselement 91 sechs Stabenden umgeben.

Vorzugsweise berührt jedes Verbindungselement 8,9,91 den Rotorkern 3.

Vorzugsweise ist jedes Stabende 41 von wenigstens einem Verbindungselement umgeben. Die Verbindungselemente sind vorzugsweise vorgefertigt und weisen Aussparungen auf, die einer Form des Stabs 41 im Wesentlichen entsprechen. Zwischen Stab und Verbindungselement ist vorteilhaft ein Spalt vorhanden, welcher beim additiven Verfahren mit Material gefüllt wird.

Zwischen zwei benachbarten Verbindungselementen ist vorteilhaft ein Spalt vorhanden, welcher beim additiven Verfahren mit Material gefüllt wird.

Auf diese Weise wird der Kurzschlussring gebildet.

Die Figur zeigt kein Ausführungsbeispiel, sondern verschiedene Ausgestaltungen des Verbindungsmittels.

Vorzugsweise wird nur eine Art der genannten Verbindungselemente verwendet. Jedoch ist auch eine Mischform denkbar.

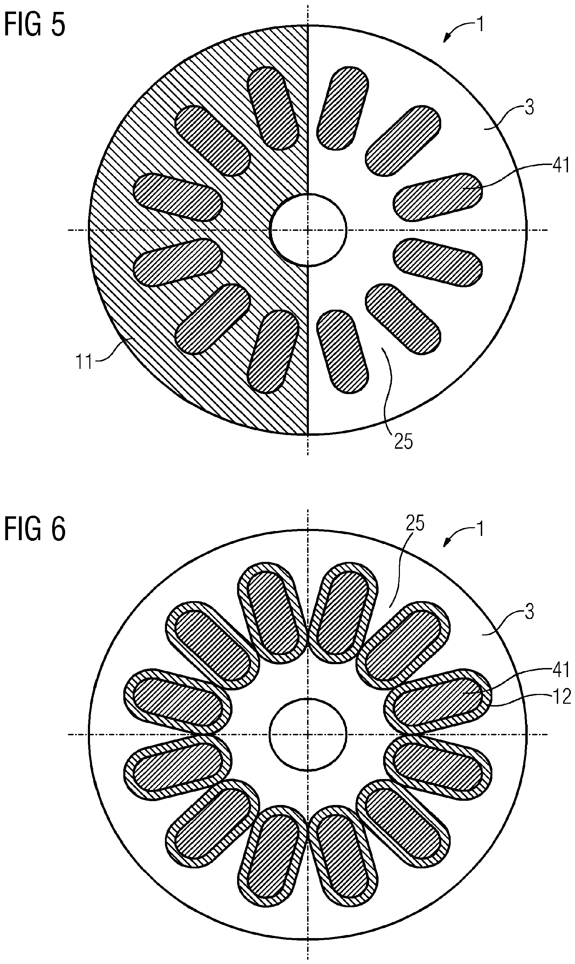

FIG 5 zeigt eine Ausgestaltung des Verbindungsmittels mittels eines halbkreisförmigen Verbindungselements 11.

Die Figur zeigt ein halbkreisförmiges Verbindungselement 11. Das halbkreisförmige Verbindungselement 11 umgibt in der Figur die halbe Anzahl an aus dem Rotorkern herausragenden Stabenden 41.

Vorzugsweise berührt das halbkreisförmige Verbindungselement 11 den Rotorkern 3.

FIG 6 zeigt eine Ausgestaltung des Verbindungsmittels mittels eines ringförmigen Verbindungselements 12.

Die Figur zeigt ringförmige Verbindungselemente 12. Jedes ringförmige Verbindungselement 12 umgibt in der Figur ein Stabende 41.

Ein ringförmiges Verbindungselement 12 kann jedoch auch zwei oder mehr Stabenden 41 umgeben.

Das ringförmige Verbindungselement 12 ist vorzugsweise derart ausgeführt, dass sich zwei ringförmige Verbindungselemente 12, die jeweils um ein Stabende 41 gelegt sind, wobei die Stabenden 41 benachbart sind, berühren.

Vorzugsweise berührt das ringförmige Verbindungselement 12 den Rotorkern 3.

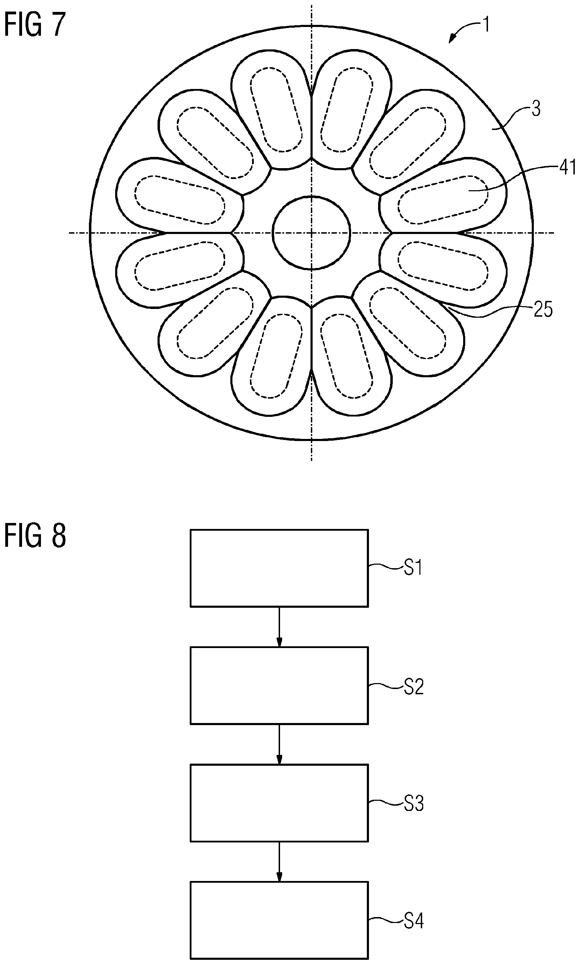

FIG 7 zeigt eine Ausgestaltung des Verbindungsmittels, wobei das Stabende 41 selbst das Verbindungsmittel ist.

Das Stabende 41 ist in der Figur als Niete ausgeführt. Das Stabende 41 wurde vorzugsweise mittels Krafteinwirkung zur Niete gepresst. In anderen Worten: Die Stabenden 41 sind zu flachen Köpfen gedrückt.

Die Stabenden 41 ragen vorzugsweise so weit aus dem Rotorkern 3 hinaus, dass sich wenigstens zwei zu Nieten gerückte benachbarte Stabenden 41 berühren.

FIG 8 zeigt das Verfahren zur Herstellung.

Mittels des Verfahrens wird ein Kurzschlussring für einen Käfigläufer gebildet.

In einem Verfahrensschritt S1 wird ein Rotorkern bereitgestellt.

In einem Verfahrensschritt S2 werden die Stäbe eingefügt.

In einem Verfahrensschritt S3 wird das gewünschte Verbindungsmittel oder eine Kombination aus wenigstens zwei Verbindungsmitteln aufgesetzt.

In einem Verfahrensschritt S4 wird der Zwischenraum zwischen den Stabenden mittels eines additiven Verfahrens gefüllt.

## Patentansprüche

1. Verfahren zur Herstellung eines Rotors (1) einer dynamoelektrischen rotatorischen Maschine,
- wobei der Rotor (1) einen konzentrisch zur Rotorachse (R) angeordneten Rotorkern (3) aufweist,
- wobei der Rotorkern (3) Stäbe (4) mit Stabenden (41,42) aufweist,
- wobei die Stabenden (41,42) über wenigstens ein axiales Ende (5,6) des Rotorkerns (3) hinausragend ausgeführt sind,
wobei die Stabenden (41,42) mittels eines Verbindungsmittels (7,8,9,11,12) verbunden werden, wobei ein Zwischenraum (25, 26) zwischen den Stabenden (41,42) mittels eines additiven Verfahrens gefüllt wird.

2. Verfahren nach Anspruch 1, wobei die Stabenden (41,42) mittels wenigstens eines Drahtes (7) verbunden werden.

3. Verfahren nach einem der vorhergehenden Ansprüche, wobei die Stabenden (41,42) mittels wenigstens eines keilförmigen Verbindungselements (8) verbunden werden.

4. Verfahren nach einem der vorhergehenden Ansprüche, wobei die Stabenden (41,42) mittels wenigstens eines ringförmigen Verbindungselements (12) verbunden werden.

5. Verfahren nach einem der vorhergehenden Ansprüche, wobei die Stabenden (41,42) mittels wenigstens eines sektorförmigen Verbindungselements (9) verbunden werden.

6. Verfahren nach einem der vorhergehenden Ansprüche, wobei die Stabenden (41,42) mittels wenigstens eines halbkreisförmigen Verbindungselements (11) verbunden werden.

7. Verfahren nach einem der vorhergehenden Ansprüche, wobei die Stabenden (41,42) durch sich selbst verbunden werden.

8. Verfahren nach einem der vorhergehenden Ansprüche, wobei das additive Verfahren das 3DMP-Verfahren ist.

9. Verfahren nach einem der vorhergehenden Ansprüche, wobei das additive Verfahren das Cold-Spray-Verfahren ist.

10. Verfahren nach einem der vorhergehenden Ansprüche, wobei das Verbindungsmittel Kupfer und/oder Aluminium und/oder deren Legierungen umfasst.

11. Verfahren nach einem der vorhergehenden Ansprüche, wobei das Material für das additive Verfahren Kupfer und/oder Aluminium und/oder deren Legierungen umfasst.

12. Kurzschlussring für einen Rotor (1) einer dynamoelektrischen rotatorischen Maschine, hergestellt nach einem der Ansprüche 1 bis 11.

13. Rotor (1) einer dynamoelektrischen rotatorischen Maschine, aufweisend einen Kurzschlussring nach Anspruch 12.

14. Dynamoelektrische rotatorische Maschine, aufweisend einen Rotor nach Anspruch 13.
